# EUROPEAN PATENT APPLICATION

(11) **EP 4 380 292 A1**
(43) Date of publication of application: **05.06.2024**
(21) Application number: 22848404.4
(22) Date of filing: 21.07.2022
(51) Int. Cl.: H04W 76/10

(54) **RRC CONNECTION METHOD, AND DEVICE AND READABLE STORAGE MEDIUM**

(30) Priority: 27.07.2021 CN 202110849256
(71) Applicant: Vivo Mobile Communication Co., Ltd., Dongguan, Guangdong 523863 (CN)
(72) Inventor: ZHENG, Qian, Dongguan, Guangdong 523863 (CN); YANG, Xiaodong, Dongguan, Guangdong 523863 (CN); LIU, Jiamin, Dongguan, Guangdong 523863 (CN)
(74) Representative: Lavoix
(86) International application number: PCT/CN2022/107082
(87) International publication number: WO 2023/005799

(57) **Abstract**

Embodiments of this application provide an RRC connection method and device, and a readable storage medium, and pertain to the field of communications technology. The method includes: in a case that a Relay UE is in RRC_IDLE or RRC INACTIVE, determining, by the Relay UE, whether a first condition is satisfied; and triggering, by the Relay UE, an RRC connection establishment or RRC connection recovery procedure in a case that the Relay UE satisfies the first condition; where the first condition includes one or more of the following: the Relay UE determines to provide a relay service for one or more remote terminals Remote UEs; and the Relay UE receives one or more first messages from one or more Remote UEs, where each of the first messages carries a first cause value cause value of each of the Remote UEs for requesting RRC connection recovery or RRC connection establishment.

## Description

### CROSS-REFERENCES TO RELATED APPLICATIONS

This application claims priority to Chinese Patent Application No. 202110849256.X filed in China on July 27, 2021, which is incorporated herein by reference in its entirety.

### TECHNICAL FIELD

Embodiments of this application relate to the communications field, and specifically, to an RRC connection method and device, and a readable storage medium.

### BACKGROUND

During a radio resource control (Radio Resource Control, RRC) connection establishment procedure in a sidelink relay (Sidelink Relay, SL Relay) scenario, if a relay terminal (Relay UE, or relay user equipment) has not been in a radio resource control connected state (RRC_CONNECTED) upon receipt of a message from a remote terminal (Remote UE, or remote user equipment), the relay terminal needs to establish its own RRC connection via the Uu air interface and then it can provide a relay service for the Remote UE. However, specific details of the RRC connection establishment or RRC connection recovery procedure initiated by the Relay UE have not been determined yet.

### SUMMARY

Embodiments of this application are intended to provide an RRC connection method and device, so as to solve the problem that access requests of Relay UEs cannot be properly controlled or accepted on existing networks.

According to a first aspect, an embodiment of this application provides an RRC connection method, and the method includes:
in a case that a relay terminal Relay UE is in a radio resource control idle state RRC_IDLE or a radio resource control inactive state RRC_INACTIVE, determining, by the Relay UE, whether a first condition is satisfied; and
triggering, by the Relay UE, an RRC connection establishment or RRC connection recovery procedure in a case that the Relay UE satisfies the first condition; where
the first condition includes one or more of the following:
   the Relay UE determines to provide a relay service for one or more remote terminals Remote UEs; and
   the Relay UE receives one or more first messages from one or more Remote UEs, where each of the first messages carries a first cause value (cause value) of each of the Remote UEs for requesting RRC connection recovery or RRC connection establishment.

According to a second aspect, an embodiment of this application provides an RRC connection apparatus, and the apparatus includes:
a first determining module, configured to: in a case that a Relay UE is in RRC_IDLE or RRC INACTIVE, determine, for the Relay UE, whether a first condition is satisfied; and
a triggering module, configured to trigger, for the Relay UE, an RRC connection establishment or RRC connection recovery procedure in a case that the Relay UE satisfies the first condition; where
the first condition includes one or more of the following:
   the Relay UE determines to provide a relay service for one or more Remote UEs; and
   the Relay UE receives one or more first messages from one or more Remote UEs, where each of the first messages carries a first cause value cause value of each of the Remote UEs for requesting RRC connection recovery or RRC connection establishment.

According to a third aspect, an embodiment of this application provides an SL UE, including a processor, a memory, and a program or instructions stored on the memory and capable of running on the processor, where when the program or instructions are executed by the processor, the steps of the RRC connection method according to the first aspect are implemented.

According to a fourth aspect, an embodiment of this application provides a readable storage medium, where the readable storage medium stores a program or instructions, and when the program or instructions are executed by a processor, the steps of the RRC connection method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

According to a sixth aspect, an embodiment of this application provides a computer program product. The computer program product is stored in a non-volatile storage medium, and the computer program product is configured to be executed by at least one processor to implement the steps of the method according to the first aspect.

According to a seventh aspect, an embodiment of this application further provides an execution apparatus, where the execution apparatus is configured to implement the method according to the first aspect.

In the embodiments of this application, when satisfying the first condition, the Relay UE in RRC_IDLE or RRC INACTIVE triggers an RRC connection establishment or RRC connection recovery procedure and determines the RRC connection establishment (when in RRC_IDLE) or RRC connection recovery (when in RRC_INACTIVE) procedure. This ensures that access requests of the Relay UE are properly controlled and accepted by a network.

### BRIEF DESCRIPTION OF DRAWINGS

FIG. 1a is a schematic diagram of a structure of an existing relay network;
FIG. 1b is a schematic diagram of an RRC connection establishment procedure;
FIG. 2 is a schematic flowchart of an RRC connection method according to an embodiment of this application;
FIG. 3a is a schematic diagram of a first application scenario according to an embodiment of this application;
FIG. 3b is a schematic diagram of a second application scenario according to an embodiment of this application;
FIG. 4 is a schematic structural diagram of an RRC connection apparatus according to an embodiment of this application;
FIG. 5 is a first schematic diagram of a structure of a Relay UE according to an embodiment of this application; and
FIG. 6 is a second schematic diagram of a structure of a Relay UE according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

To better understand the solution in the embodiments of this application, the following description is first provided.

### 1. Sidelink Relay mechanism

The relay (Relay) technology in wireless communications systems is to add one or more relay nodes between a base station and a terminal, for forwarding radio signals for one or more times. In other words, the radio signals reach the terminal through a few hops.

The wireless relay technology can extend cell coverage and make up for blind spots of cell coverage while increasing cell capacity through spatial resource reuse. For indoor coverage, the Relay technology can also help reduce penetration loss and improve indoor coverage quality.

A simple two-hop relay is used as an example. The wireless relay divides a base station-terminal link into two links: base station-relay station and relay station-terminal. This makes it possible to replace one low-quality link with two high-quality links, thereby increasing the link capacity and coverage.

Currently, the relay supported by long term evolution (Long Term Evolution, LTE) is a terminal-network relay (UE-to-Network relay). That is, the Relay connects UEs on one end and a network on another end. The user equipment UE connected to the relay is called a Remote UE (Remote UE), or a remote terminal.

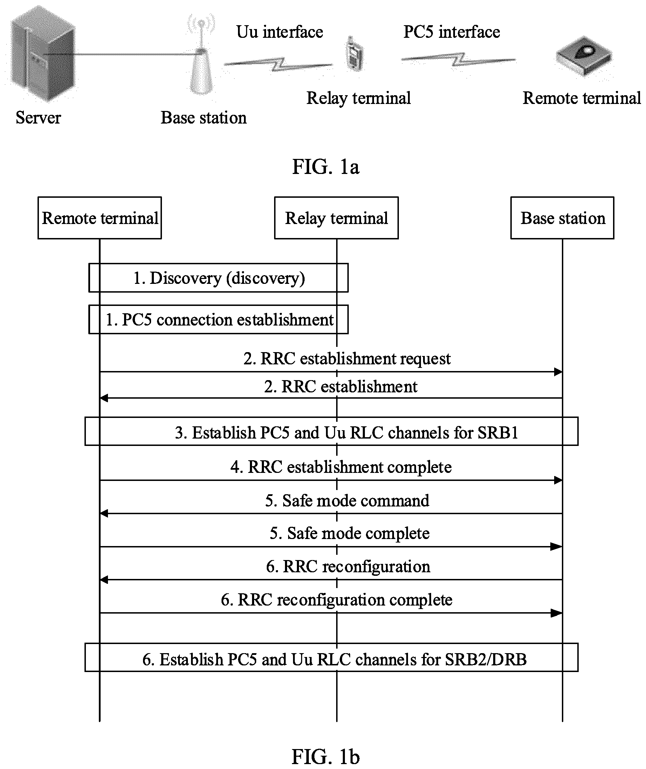

How the UE-to-Network Relay mechanism is supported in new radio (New Radio, NR) will be under research. FIG. 1a illustrates a typical scenario. This is a typical UE-to-Network scenario, where a Remote UE needs to transmit data with the network side, but due to poor coverage, it uses a relay terminal (also referred to as relay user equipment, Relay UE) to forward data. In this case, a Uu interface is used between the Relay UE and the base station, and a Sidelink (PC5) interface is used between the Relay UE and the Remote UE. Generally, the Relay UE is open and can serve any Remote UE.

### 2. RRC connection establishment procedure in a Sidelink Relay scenario. Refer to FIG. 1b.

Step 1. A Remote UE and a Relay UE perform a discovery (discovery) procedure, and then establish a PC5 RRC connection.

Step 2. The Remote UE sends an RRC establishment (RRCSetupRequest) message to a base station, and the base station returns an RRCSetup message to the Remote UE. Specifically, the two messages are forwarded by the Relay UE to the base station and the Remote UE respectively. In a case that the Relay UE has not been in RRC_CONNECTED upon receipt of the message from the Remote UE, the Relay UE needs to establish its own RRC connection via the Uu air interface and then it can provide a relay service for the Remote UE.

Step 3. A signaling radio bearer (Signaling Radio Bearer, SRB) 1 dedicated bearer is established between the base station and the Remote UE. The SRB1 dedicated bearer for the Remote UE consists of two radio link control (Radio Link Control, RLC) channels: PC5 (between the Remote UE and the Relay UE) and Uu (between the Relay UE and the base station). Specifically, the two RLC channels are used for transmitting/receiving RRC messages of SRB1 type between the Remote UE and the base station.

Step 4. The Remote UE sends an RRC establishment complete (RRCSetupComplete) message to the base station. Specifically, this message is forwarded by the Remote UE to the base station.

Step 5. Security is activated between the Remote UE and the base station. The messages and procedures for activating security are the same as existing mechanisms.

Step 6. An SRB2/data radio bearer (Data Radio Bearer, DRB) dedicated bearer is established between the base station and the Remote UE. The SRB2/DRB dedicated bearer for the remote UE consists of two RLC channels: PC5 (between the Remote UE and the Relay UE) and Uu (between the Relay UE and the base station). Specifically, the two RLC channels are used for transmitting/receiving RRC/non-access stratum (Non Access Stratum, NAS) messages of SRB2 type and uplink and downlink service data between the Remote UE and the base station. Specifically, an existing RRC reconfiguration mechanism is reused.

### 3. Cause value

Various cause values are pre-configured in current protocols as follows:
EstablishmentCause ::= ENUMERATED { emergency, highPriorityAccess, mt-Access, mo-Signalling mo-Data, mo-VoiceCall, mo-VideoCall, mo-SMS, mps-PriorityAccess, mcs-PriorityAccess, spare6, spare5, spare4, spare3, spare2, spare 1 }
ResumeCause::=ENUMERATED {emergency, highPriorityAccess, mt-Access, mo-Signalling, mo-Data, mo-VoiceCall, mo-VideoCall, mo-SMS, ma-Update, mps-PriorityAccess, mcs-PriorityAccess, spare1, spare2, spare3, spare4, spare5 }.

Step 2 in FIG. 1b describes a technical scenario. In a case that the Relay UE has not been in RRC_CONNECTED upon receipt of a message from the Remote UE, the Relay UE needs to establish its own RRC connection via the Uu air interface and then it can provide a relay service for the Remote UE. Specific details have not been standardized for the RRC connection establishment (for RRC_IDLE) or RRC connection recovery (for RRC_INACTIVE) procedure initiated by the Relay UE.

In conclusion, details discussed in embodiments of this application include how the Relay UE should determine and use a cause value to initiate its own RRC connection establishment or recovery procedure.

The following describes in detail the RRC connection method provided in the embodiments of this application through specific embodiments and application scenarios thereof with reference to the accompanying drawings.

Technologies described in this specification are not limited to a 5th-generation mobile communication technology (5th-generation, 5G) system, a later evolved communications system, and an LTE/LTE advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. The CDMA system can implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. A TDMA system may implement radio technologies such as the global system for mobile communications (Global System for Mobile Communication, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are parts of a universal mobile telecommunications system (Universal Mobile Telecommunications System, UMTS). LTE and more advanced LTE (such as LTE-A) are new UMTS versions that use E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technology described herein may be used in the above-mentioned systems and radio technologies as well as other systems and radio technologies.

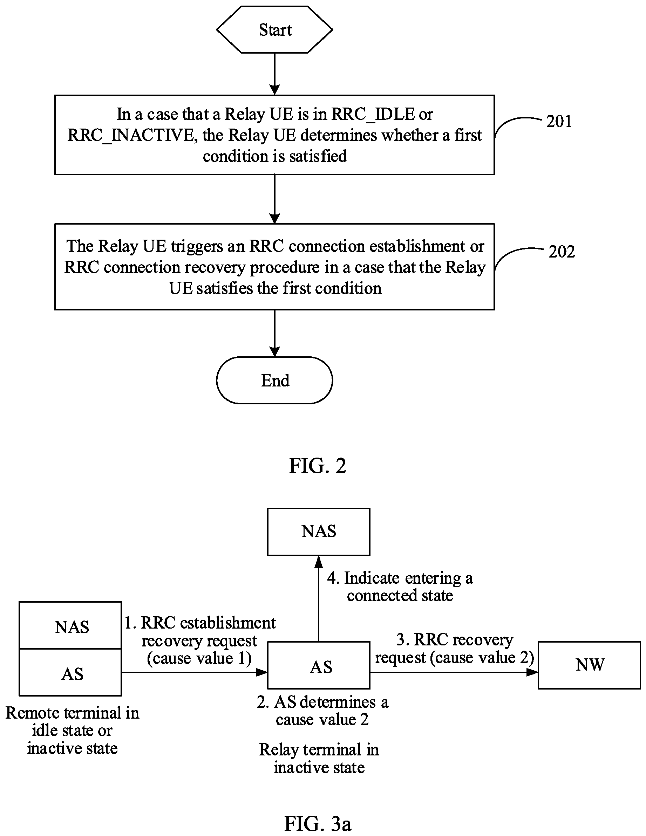

Referring to FIG. 2, an embodiment of this application provides an RRC connection method, and the method includes the following steps.

Step 201. In a case that a Relay UE is in RRC_IDLE or RRC_INACTIVE, the Relay UE determines whether a first condition is satisfied.

Step 202. The Relay UE triggers an RRC connection establishment or RRC connection recovery procedure in a case that the Relay UE satisfies the first condition.

The first condition includes one or more of the following:
(1) the Relay UE determines to provide a relay service for one or more Remote UEs; and
(2) the Relay UE receives one or more first messages from one or more Remote UEs, where each of the first messages carries a first cause value of each of the Remote UEs for requesting RRC connection recovery or RRC connection establishment. It should be noted that whether a first message is used for requesting RRC connection recovery or requesting RRC connection establishment depends on the RRC state of the Remote UE sending the first message. In a case that the Remote UE is in RRC_IDLE, the corresponding first message is used for requesting RRC connection establishment; in a case that the Remote UE is in RRC_INACTIVE, the corresponding first message is used for RRC connection recovery. This first cause value corresponds to the cause value for the Remote UE.

In the embodiment of this application, in a case that the Relay UE satisfies the first condition, the RRC connection establishment or RRC connection recovery procedure is triggered. This ensures that access requests of the Relay UE are properly controlled and accepted by a network.

In the embodiment of this application, RRC states of the Relay UE and the Remote UE may be as described in the following six cases:
case 1: Relay UE in RRC IDLE, all Remote UEs in RRC_IDLE;
case 2: Relay UE in RRC_IDLE, all Remote UEs in RRC_INACTIVE;
case 3: Relay UE in RRC_INACTIVE, all Remote UEs in RRC_IDLE;
case 4: Relay UE in RRC_INACTIVE and all Remote UEs in RRC_INACTIVE;
case 5: Relay UE in RRC_IDLE, some Remote UEs in RRC_IDLE and some Remote UEs in RRC INACTIVE; and
case 6: Relay UE in RRC_INACTIVE, some Remote UEs in RRC_IDLE and some Remote UEs RRC INACTIVE.

In some implementations, the following four combinations may be present:
(1) in a case that the Relay UE is in RRC_INACTIVE, the access stratum (Access Stratum, AS) of the Relay UE determines target information, where the target information includes a second cause value and/or a second access category (Access Category, AC);
(2) in a case that the Relay UE is in RRC_IDLE, the AS of the Relay UE determines target information, where the target information includes a second cause value and/or a second AC;
(3) in a case that the Relay UE is in RRC _INACTIVE, a non-access stratum (Non-Access Stratum, NAS) of the Relay UE determines target information, where the target information includes at least one of a second cause value, a second AC, and trigger of a NAS signaling procedure; and
(4) in a case that the Relay UE is in RRC_IDLE, a NAS of the Relay UE determines target information, where the target information includes at least one of a second cause value, a second AC, and trigger of a NAS signaling procedure.

Regarding the foregoing four combinations, in a possible implementation, in a case that the Relay UE is in RRC_IDLE, the triggering, by the Relay UE, an RRC connection establishment procedure is determined by the NAS of the Relay UE; and
in a case that the Relay UE is in RRC _INACTIVE, the triggering, by the Relay UE, an RRC connection recovery procedure is determined by the AS of the Relay UE.

Further, this method further includes: in a case that the Relay UE is in RRC _INACTIVE, determining, by the AS of the Relay UE, target information, where the target information includes a second cause value and/or a second AC; and
in the case that the Relay UE is in RRC_IDLE, sending, by the AS of the Relay UE, first indication information to the NAS of the Relay UE, and determining, by the NAS of the Relay UE, the target information based on the first indication information, where the target information includes at least one of the second cause value, the second AC, and trigger of a NAS signaling procedure.

Further, in a scenario where only a cause value is included, this method further includes: in a case that the target information does not include the second AC, skipping, by the Relay UE, a unified access control (Unified Access Control, UAC) operation and directly sending to a network device an RRC connection establishment request message or an RRC connection recovery request message, where the RRC connection establishment request message or the RRC connection recovery request message carries the second cause value.

Further, in a scenario where a cause value and an AC are included, this method further includes: in a case that the target information includes the second cause value and the second AC, performing, by the Relay UE, a UAC operation based on the second AC; and sending, by the Relay UE to a network device, an RRC connection establishment request message or an RRC connection recovery request message after access barring of the UAC operation is released, where the RRC connection establishment request message or the RRC connection recovery request message carries the second cause value.

In a possible implementation, in a case that the target information includes the second cause value, the determining, by the AS of the Relay UE, target information includes any one of the following.
(1) Assigning, by the AS of the Relay UE, a predetermined cause value as the second cause value, where the predetermined cause value is a protocol-defined, pre-configured, or network-configured cause value, for example, emergency, highPriorityAccess, mps-PriorityAccess, mcs-PriorityAccess, mt-Access, mo-Signalling, mo-Data, mo-VoiceCall, mo-VideoCall, mo-SMS, and ma-Update.

Specifically, in this manner, the setting is fixed without considering the situations of the Relay UE itself and the Remote UE.

(2) Assigning, by the AS of the Relay UE, a specified first cause value among all the received first cause values, as the second cause value.

Specifically, in this manner, only the Remote UE is considered, and the setting is based on one of all the cause values for the Remote UE.

The specified first cause value among all the received first cause values includes any one of the following:
(a) a first cause value carried in the 1st first message among all the first messages. It should be noted that from the perspective of reception by the Relay UE, the first cause value carried in the 1st first message refers to the cause value carried in the earliest first message received by the Relay UE; from the perspective of sending by the Remote UE, the first cause value carried in the 1st first message refers to the first message carried in the first message sent by the Remote UE first selected by the Relay UE.
(b) any one of all the first cause values.
(c) one of all the first cause values, with the highest priority in a predetermined priority order, where the predetermined priority order is a protocol-defined, pre-configured, or network-configured priority order, for example: emergency > highPriorityAccess, mps-PriorityAccess, mcs-PriorityAccess > mt-Access, mo-Signalling, mo-Data, mo-VoiceCall, mo-VideoCall, mo-SMS > ma-Update. In the case of equal priority, the Relay UE is further allowed to randomly select one of them.

(3) Assigning, by the AS of the Relay UE, a value with a highest priority in all the first cause values and ma-Update, as the second cause value, where the priority is a protocol-defined, pre-configured, or network-configured priority.

Specifically, in this manner, both the Relay UE and the Remote UE are considered, and this manner can be used in the following scenario: the upper layer of the Relay UE has no signaling and/or service, but the AS of the Relay UE needs a RAN-based notification area update (RAN-based Notification Area Update, RNAU).

The upper layer refers to any layer above the AS, for example, the NAS and the application layer.

(4) Assigning, by the AS of the Relay UE, a cause value from an upper layer as the second cause value.

Specifically, in this manner, only the Relay UE is considered, and this manner can be used in a scenario where the upper layer of the Relay UE has signaling and/or service. Furthermore, this manner is applicable regardless of whether the AS of the Relay UE needs an RNAU or not, which is not limited herein.

In a possible implementation, in a case that the target information includes the second AC, the determining, by the AS of the Relay UE, target information includes: determining, by the AS of the Relay UE, the second AC based on a mapping relationship between the second cause value and the second AC, where the mapping relationship is protocol-defined, pre-configured, or network-configured.

In a possible implementation, the first indication information is used to indicate at least one of the following:
(1) receipt of a connection establishment request or a connection recovery request from one or more Remote UEs;
(2) determination to provide a relay service for one or more Remote UEs;
(3) the first cause value for one or more Remote UEs, where the first cause value is carried in the first message;
(4) a third cause value suggested by the AS of the Remote UE; where it should be noted that the third cause value can be determined with reference to the method by which the AS of the Relay UE determines the second cause value, for example, the AS of the Relay UE sets the third cause value to a first cause value carried in one of all the received first messages; or the AS of the Relay UE sets the third cause value to the one with higher priority among all first cause values and ma-Update; and
(5) a service attribute of one or more Remote UEs, where the service attribute may include: high/medium/low-priority service, emergency/non-emergency service, whether the service is a high-priority service, whether the service an emergency service, and the like.

In a possible implementation, this method further includes:
in a case that the Relay UE sends the RRC connection recovery request message to the network device and receives an RRC connection recovery message or an RRC connection establishment message from the network device, indicating, by the AS of the Relay UE to the NAS of the Relay UE, RRC connection recovery success and/or entering RRC_CONNECTED; and sending, by the Relay UE, an RRC connection recovery complete message to the network device; or
in a case that the Relay UE sends the RRC connection recovery request message to the network device, and receives an RRC connection release message or an RRC connection rejection message from the network device or determines that RRC connection recovery fails, indicating, by the AS of the Relay UE to the NAS of the Relay UE, recovery failure of an RRC connection for providing relay service.

In a possible implementation, this method further includes:
in a case that the Relay UE sends an RRC connection request message to the network device and receives an RRC connection establishment message from the network device, indicating, by the AS of the Relay UE to the NAS of the Relay UE, RRC connection establishment success and/or entering RRC_CONNECTED; and sending, by the Relay UE, an RRC connection establishment complete message to the network device, and triggering the NAS signaling procedure; or
in a case that the Relay UE sends the RRC connection recovery request message to the network device, and receives an RRC connection release message or an RRC connection rejection message from the network device or determines that RRC connection recovery fails, indicating, by the AS of the Relay UE to the NAS of the Relay UE, establishment failure of an RRC connection for providing relay service.

The following describes in detail the solution in this application with reference to specific embodiments.

Embodiment 1. Referring to FIG. 3a, an AS stratum of a Relay UE determines a cause value. In this embodiment, the Relay UE is currently in RRC_INACTIVE. An RRC connection recovery procedure is initiated through the Uu air interface.

Step 1. The Relay UE triggers the RRC connection recovery procedure at the Uu air interface in a case that the Relay UE is currently in RRC_INACTIVE and satisfies at least one of the following conditions.

Condition 1: The Relay UE determines to provide a relay service for one or more Remote UEs.

Condition 2: The Relay UE receives an RRC connection establishment request or RRC connection recovery request message from at least one of the one or more Remote UEs.

Step 2. The AS stratum of the Relay UE determines a cause value 2 carried in the RRC connection recovery request message. Specifically, the Relay UE determines to perform step 2.1 or step 2.2, depending on the its own situation "whether an upper layer has received signaling and/or service and whether the AS stratum needs an RNAU" and/or the situation of the Remote UE.

Step 2.1 is applicable to a case that the upper layer of the Relay UE has no signaling and/or service and the AS stratum does not need an RNAU. The AS stratum sets a cause value by using one of the following methods.

Method 1: Assign the cause value 1 in the first received RRC connection establishment request or RRC connection recovery request message as the cause value 2.

Method 2: Select one cause value 1 from the cause values 1 in all the received RRC connection establishment request or RRC connection recovery request messages, and assign it as the cause value 2.

In method 2, the specific selection method may be determined by the UE or based on a certain priority order. The priority order may be defined by a protocol, pre-configured, or indicated by network configuration, for example: emergency> highPriorityAccess, mps-PriorityAccess, mcs-PriorityAccess> mt-Access, mo-Signalling, mo-Data, mo-VoiceCall, mo-VideoCall, mo-SMS> ma-Update. In the case of equal priority, the UE is further allowed to randomly select one of them.

Method 3: Select one of the cause values supported by existing protocols, and assign it as the cause value 2.

In method 3, the selectable values can be all or some of the cause values supported by the existing protocols, and the specific value(s) may be defined by a protocol, pre-configured, or indicated by network configuration, for example: at least one of emergency, highPriorityAccess, mps-PriorityAccess, mcs-PriorityAccess, mt-Access, mo-Signalling, mo-Data, mo-VoiceCall, mo-VideoCall, mo-SMS, and rna-Update.

Step 2.2 is applicable to a case that the upper layer of the Relay UE has no signaling and/or service but the AS stratum needs an RNAU. The AS stratum sets a cause value by using one of the following methods.

Method 1: Same as method 1 in step 2.1.

Method 2: Select one cause value from the cause values 1 in all the received RRC connection establishment request or RRC connection recovery request messages and ma-Update, and assign it as the cause value 2.

In method 2, the specific selection method may be determined by the UE or based on a certain priority order. The priority order may be defined by a protocol, pre-configured, or indicated by network configuration, for example: emergency> highPriorityAccess, mps-PriorityAccess, mcs-PriorityAccess> mt-Access, mo-Signalling, mo-Data, mo-VoiceCall, mo-VideoCall, mo-SMS> ma-Update. In the case of equal priority, the UE is further allowed to randomly select one of them.

Method 3: Same as method 3 in step 2.1.

Method 4: The cause value 2 is set to ma-Update.

Step 2.3 is applicable to a case that the Relay UE has upper layer signaling and/or service. The AS stratum sets a cause value by using one of the following methods.

Method 1: Same as method 1 in step 2.1.

Method 2: Select one cause value from the cause values 1 in all the received RRC connection establishment request or RRC connection recovery request messages and cause values from the upper layer, and assign it as the cause value 2.

In method 2, the specific selection method may be determined by the UE or based on a certain priority order. The priority order may be defined by a protocol, pre-configured, or indicated by network configuration, for example: emergency> highPriorityAccess, mps-PriorityAccess, mcs-PriorityAccess> mt-Access, mo-Signalling, mo-Data, mo-VoiceCall, mo-VideoCall, mo-SMS> ma-Update. In the case of equal priority, the UE is further allowed to randomly select one of them.

Method 3: Same as method 3 in step 2.1.

Method 4: The cause value 2 is set to the cause value provided by the upper layer.

Step 3: The Relay UE sends an RRC connection recovery request message to a base station, where the RRC connection recovery request message carries the cause value 2.

Step 4: The AS stratum of the Relay UE sends indication information to the NAS stratum based on whether the RRC connection recovery procedure succeeds. Specifically, the AS stratum determines content of the indication information by using one of the following methods.

Step 4.1. If RRC connection recovery succeeds, the AS stratum of the Relay UE further sends to the NAS stratum an indication of "RRC connection recovery success and/or entering RRC CONNECTED".

Step 4.2. If RRC connection recovery fails, the AS stratum of the Relay UE further informs the NAS stratum of "the cause value for RRC connection release and/or entering RRC IDLE".

According to step 4.2, a new "RRC connection release cause value" is defined for indicating relay service-specific RRC connection recovery failure or non-relay service RRC connection recovery failure.

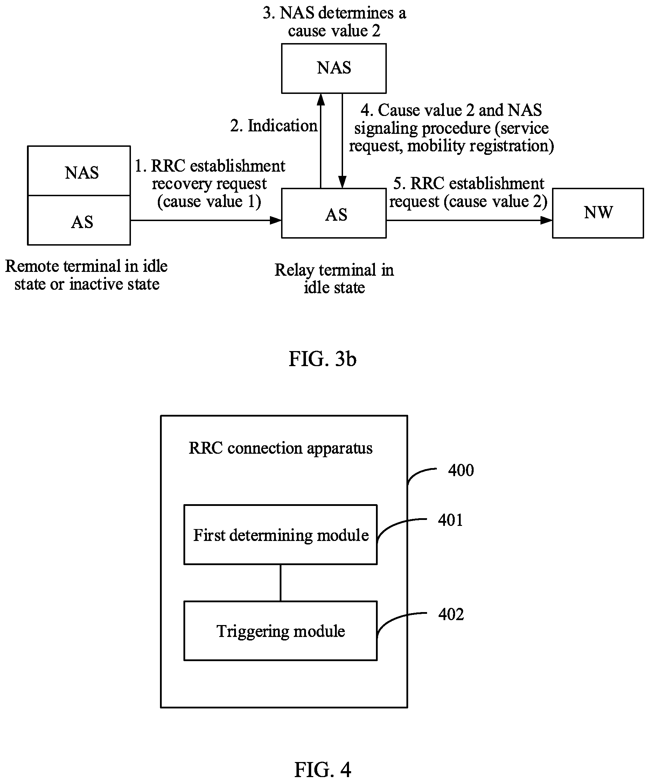

Embodiment 2. Referring to FIG. 3b, a NAS stratum of the Relay UE determines a cause value. In this embodiment, the Relay UE is currently in RRC_IDLE. An RRC connection establishment procedure is initiated through the Uu air interface.

Step 1. The Relay UE triggers the RRC connection establishment procedure at the Uu air interface in a case that the Relay UE is currently in RRC_IDLE and at least one of the following conditions is satisfied.

Condition 1: The Relay UE determines to provide a relay service for one or more Remote UEs.

Condition 2: The Relay UE receives an RRC connection establishment request or RRC connection recovery request message from at least one of the one or more Remote UEs.

Step 2. An AS stratum of the Relay UE sends indication information to the NAS layer. The indication information includes at least one of the following:
indicating receipt of a connection request from the Remote UE, where the "connection request" is a collective term for the connection establishment request and the connection recovery request, and may specifically refer to an RRC connection establishment or RRC connection recovery request depending on the RRC state of each Remote UE;
indicating the need to provide a relay service for a Remote UE;
indicating a cause value 1 of at least one Remote UE, where the "cause value 1" is carried in the RRC connection establishment request or RRC connection recovery request message of the Remote UE; and
indicating a cause value 3 suggested by the AS stratum of the Remote UE, where specifically, the AS stratum determines the cause value 3 with reference to all the cause values 1 and the situation of the AS stratum, and the finally suggested cause value 3 is independent of the cause value 1 and they may be the same or different.

Step 3. After receiving the indication information from the AS stratum, the NAS stratum of the Relay UE provides at least one of the following information for the AS stratum:
cause value 2 (cause value): specifically, the cause value 2 is determined by the NAS stratum of the Relay UE based on whether signaling and/or service is present and the indication information from the AS stratum; and
triggered NAS signaling procedure: the NAS signaling procedure is a service establishment request procedure or a mobility registration procedure.

Step 4. The Relay UE sends an RRC connection establishment request message to a base station, where the RRC connection establishment request message carries the cause value 2.

Step 5: The AS stratum of the Relay UE further sends indication information to the NAS stratum based on whether the RRC connection recovery procedure succeeds. Specifically, the AS stratum determines content of the indication information by using one of the following methods.

Step 5.1. If RRC connection recovery succeeds, the AS stratum of the Relay UE further sends to the NAS stratum an indication of "RRC connection recovery success and/or entering RRC CONNECTED".

According to step 5.1, the NAS signaling procedure mentioned in step 3 is initiated and completed.

Step 5.2. If RRC connection recovery fails, the AS stratum of the Relay UE further informs the NAS stratum of "the cause value for RRC connection release and/or entering RRC IDLE".

According to step 5.2, a new "RRC connection release cause value" is defined for indicating relay service-specific RRC connection recovery failure or non-relay service RRC connection recovery failure.

It should be noted that the RRC connection method in this embodiment of this application may be performed by an RRC connection apparatus or a control module for performing the RRC connection method in the RRC connection apparatus. In the embodiments of this application, the RRC connection apparatus performing the RRC connection method is used as an example for describe the RRC connection apparatus provided in the embodiments of this application.

Referring to FIG. 4, an embodiment of this application provides an RRC connection apparatus 400, and the apparatus includes:
a first determining module 401, configured to: in a case that a Relay UE is in RRC_IDLE or RRC INACTIVE, determine, for the Relay UE, whether a first condition is satisfied; and
a triggering module 402, configured to trigger, for the Relay UE, an RRC connection establishment or RRC connection recovery procedure in a case that the Relay UE satisfies the first condition; where
the first condition includes one or more of the following:
   the Relay UE determines to provide a relay service for one or more Remote UEs; and
   the Relay UE receives one or more first messages from one or more Remote UEs, where each of the first messages carries a first cause value cause value of each of the Remote UEs for requesting RRC connection recovery or RRC connection establishment.

In a possible implementation, in a case that the Relay UE is in RRC_IDLE, the triggering, by the Relay UE, an RRC connection establishment procedure is determined by a NAS of the Relay UE; and
in a case that the Relay UE is in RRC INACTIVE, the triggering, by the Relay UE, an RRC connection recovery procedure is determined by an AS of the Relay UE.

In a possible implementation, the apparatus further includes:
a second determining module, configured to determine, for the AS of the Relay UE, target information in a case that the Relay UE is in RRC _INACTIVE, where the target information includes a second cause value and/or a second AC; and
a third determining module, configured to: in a case that the Relay UE is in RRC_IDLE, send, for the AS of the Relay UE, first indication information to the NAS of the Relay UE, and determine, for the NAS of the Relay UE, the target information based on the first indication information, where the target information includes at least one of the second cause value, the second AC, and trigger of a NAS signaling procedure.

In a possible implementation, the apparatus further includes:
a first sending module, configured to: in a case that the target information does not include the second AC, skip, for the Relay UE, a unified access control UAC operation and directly send to a network device an RRC connection establishment request message or an RRC connection recovery request message, where the RRC connection establishment request message or the RRC connection recovery request message carries the second cause value.

In a possible implementation, the apparatus further includes:
an execution module, configured to perform, for the Relay UE, a UAC operation based on the second AC in a case that the target information includes the second cause value and the second AC; and
a second sending module, configured to send, for the Relay UE to a network device, an RRC connection establishment request message or an RRC connection recovery request message after access barring of the UAC operation is released, where the RRC connection establishment request message or the RRC connection recovery request message carries the second cause value.

In a possible implementation, in a case that the target information includes the second cause value, the first determining module is further configured for any one of the following:
assigning, for the AS of the Relay UE, a predetermined cause value as the second cause value, where the predetermined cause value is a protocol-defined, pre-configured, or network-configured cause value;
assigning, for the AS of the Relay UE, a specified first cause value among all the received first cause values, as the second cause value;
assigning, for the AS of the Relay UE, a value with a highest priority in all the first cause values and ma-Update, as the second cause value, where the priority is a protocol-defined, pre-configured, or network-configured priority; and
assigning, for the AS of the Relay UE, a cause value from an upper layer as the second cause value.

In a possible implementation, in a case that the target information includes the second cause value, the first determining module is further configured to:
determine, for the AS of the Relay UE, the second AC based on a mapping relationship between the second cause value and the second AC, where the mapping relationship is protocol-defined, pre-configured, or network-configured.

In a possible implementation, the specified first cause value among all the received first cause values includes any one of the following:
a first cause value carried in the 1st first message among all the first messages;
any one of all the first cause values; and
one of all the first cause values, with the highest priority in a predetermined priority order, where the predetermined priority order is a protocol-defined, pre-configured, or network-configured priority order.

In a possible implementation, the first indication information is used to indicate at least one of the following:
receipt of a connection establishment request or a connection recovery request from the one or more Remote UEs;
determination to provide a relay service for the one or more Remote UEs;
the first cause value for the one or more Remote UEs, where the first cause value is carried in the first message;
a third cause value suggested by the AS of the Remote UE; and
a service attribute of the one or more Remote UEs.

In a possible implementation, the apparatus further includes:
a third sending module, configured to:
send, for the AS of the Relay UE, second indication information to the NAS of the Relay UE in a case that the Relay UE sends the RRC connection recovery request message to the network device and receives an RRC connection recovery message or an RRC connection establishment message from the network device, where the second indication information includes RRC connection recovery success and/or entering RRC_CONNECTED; and send, for the Relay UE, an RRC connection recovery complete message to the network device; or
send, for the AS of the Relay UE, third indication information to the NAS of the Relay UE in a case that the Relay UE sends the RRC connection recovery request message to the network device, and receives an RRC connection release message or an RRC connection rejection message from the network device or determines that RRC connection recovery fails, where the third indication information includes recovery failure of an RRC connection for providing relay service.

In a possible implementation, the apparatus further includes:
a fourth sending module, configured to:
send, for the AS of the Relay UE, fourth indication information to the NAS of the Relay UE in a case that the Relay UE sends an RRC connection request message to the network device and receives an RRC connection establishment message from the network device, where the fourth indication information includes RRC connection establishment success and/or entering RRC _CONNECTED; and send, for the Relay UE, an RRC connection establishment complete message to the network device, and trigger the NAS signaling procedure; or
send, for the AS of the Relay UE, fifth indication information to the NAS of the Relay UE in a case that the Relay UE sends an RRC connection request message to the network device, and receives an RRC connection rejection message from the network device or determines that RRC connection recovery fails, where the fifth indication information is used to indicate establishment failure of an RRC connection for providing relay service.

The RRC connection apparatus in the embodiments of this application may be an apparatus, or may be a component, an integrated circuit, or a chip of a terminal. The device may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, or a personal digital assistant (personal digital assistant, PDA), or the like, and the non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The RRC connection apparatus in the embodiments of this application may be an apparatus with an operating system. The operating system may be an Android (Android) operating system, an iOS operating system, or another possible operating system. This is not specifically limited in the embodiments of this application.

The RRC connection apparatus provided in this embodiment of this application can implement the processes implemented by the method embodiments illustrated in FIG. 2 to FIG. 3b. To avoid repetition, details are not described herein again.

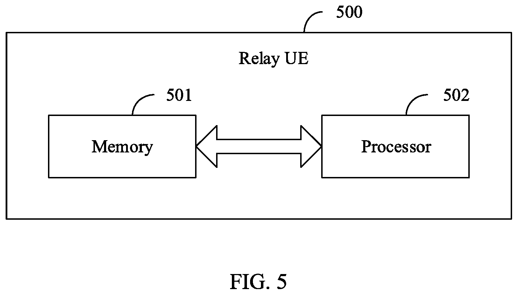

Optionally, as shown in FIG. 5, an embodiment of this application further provides a Relay UE 500, including a memory 501, a processor 502, and a program or instructions stored in the memory 501 and capable of running on the processor 502. When the program or instructions are executed by the processor 502, the processes of the foregoing RRC connection method embodiments are implemented, with the same technical effects achieved. To avoid repetition, details are not described herein again.

It should be noted that the electronic device in the embodiment of this application includes a mobile electronic device and a non-mobile electronic device.

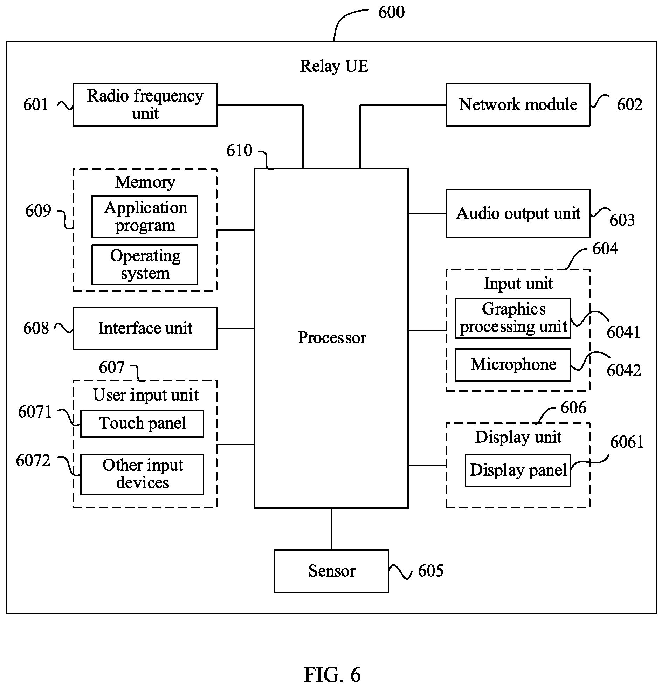

FIG. 6 is a schematic diagram of a hardware structure of a Relay UE according to an embodiment of this application.

The Relay UE 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the Relay UE 600 may further include a power source (for example, a battery) for supplying power to the components. The power source may be logically connected to the processor 610 through a power management system. In this way, functions such as charge management, discharge management, and power consumption management are implemented by using the power management system. The structure of the electronic device shown in FIG. 6 does not constitute a limitation on the electronic device. The electronic device may include more or fewer components than those shown in the figure, or some components may be combined, or there may be a different component layout. Details are not described herein again.

The processor 610 is configured to: in a case that the Relay UE is in RRC_IDLE or RRC INACTIVE, determine, for the Relay UE, whether a first condition is satisfied.

The processor 610 is further configured to trigger, for the Relay UE, an RRC connection establishment or RRC connection recovery procedure in a case that the Relay UE satisfies the first condition; where
the first condition includes one or more of the following:
the Relay UE determines to provide a relay service for one or more Remote UEs; and
the Relay UE receives one or more first messages from one or more Remote UEs, where each of the first messages carries a first cause value cause value of each of the Remote UEs for requesting RRC connection recovery or RRC connection establishment.

Optionally, in a case that the Relay UE is in RRC_IDLE, the triggering, for the Relay UE, an RRC connection establishment procedure is determined by a NAS of the Relay UE; and
in a case that the Relay UE is in RRC _INACTIVE, the triggering, by the Relay UE, an RRC connection recovery procedure is determined by an AS of the Relay UE.

Optionally, the processor 610 is configured to determine, for the AS of the Relay UE, target information, where the target information includes a second cause value and/or a second access category AC.

The processor 610 is configured to: send, for the AS of the Relay UE, first indication information to the NAS of the Relay UE, and determine, for the NAS of the Relay UE, the target information based on the first indication information, where the target information includes at least one of the second cause value, the second AC, and trigger of a NAS signaling procedure.

Optionally, the processor 610 is configured to: in a case that the target information does not include the second AC, skip, for the Relay UE, a unified access control UAC operation and directly send to a network device an RRC connection establishment request message or an RRC connection recovery request message, where the RRC connection establishment request message or the RRC connection recovery request message carries the second cause value.

The processor 610 is configured to perform, for the Relay UE, a UAC operation based on the second AC in a case that the target information includes the second cause value and the second AC.

The processor 610 is configured to send, for the Relay UE to a network device, an RRC connection establishment request message or an RRC connection recovery request message after access barring of the UAC operation is released, where the RRC connection establishment request message or the RRC connection recovery request message carries the second cause value.

Optionally, in a case that the target information includes the second cause value, the processor 610 is configured for any one of the following:
assigning, for the AS of the Relay UE, a predetermined cause value as the second cause value, where the predetermined cause value is a protocol-defined, pre-configured, or network-configured cause value;
assigning, for the AS of the Relay UE, a specified first cause value among all the received first cause values, as the second cause value;
assigning, for the AS of the Relay UE, a value with a highest priority in all the first cause values and ma-Update, as the second cause value, where the priority is a protocol-defined, pre-configured, or network-configured priority; and
assigning, for the AS of the Relay UE, a cause value from an upper layer as the second cause value.

Optionally, the processor 610 is configured to determine, in a case that the target information includes the second cause value, for the AS of the Relay UE, the second AC based on a mapping relationship between the second cause value and the second AC, where the mapping relationship is protocol-defined, pre-configured, or network-configured.

Optionally, the specified first cause value among all the received first cause values includes any one of the following:
a first cause value carried in the 1st first message among all the first messages;
any one of all the first cause values; and
one of all the first cause values, with the highest priority in a predetermined priority order, where the predetermined priority order is a protocol-defined, pre-configured, or network-configured priority order.

Optionally, the first indication information is used to indicate at least one of the following:
receipt of a connection establishment request or a connection recovery request from the one or more Remote UEs;
determination to provide a relay service for the one or more Remote UEs;
the first cause value for the one or more Remote UEs, where the first cause value is carried in the first message;
a third cause value suggested by the AS of the Remote UE; and
a service attribute of the one or more Remote UEs.

Optionally, the processor 610 is configured to: send, for the AS of the Relay UE, second indication information to the NAS of the Relay UE in a case that the Relay UE sends the RRC connection recovery request message to the network device and receives an RRC connection recovery message or an RRC connection establishment message from the network device, where the second indication information includes RRC connection recovery success and/or entering RRC _CONNECTED; and send, for the Relay UE, an RRC connection recovery complete message to the network device; or
send, for the AS of the Relay UE, third indication information to the NAS of the Relay UE in a case that the Relay UE sends the RRC connection recovery request message to the network device, and receives an RRC connection release message or an RRC connection rejection message from the network device or determines that RRC connection recovery fails, where the third indication information includes recovery failure of an RRC connection for providing relay service.

Optionally, the processor 610 is configured to: send, for the AS of the Relay UE, fourth indication information to the NAS of the Relay UE in a case that the Relay UE sends an RRC connection request message to the network device and receives an RRC connection establishment message from the network device, where the fourth indication information includes RRC connection establishment success and/or entering RRC_CONNECTED; and send, for the Relay UE, an RRC connection establishment complete message to the network device, and trigger the NAS signaling procedure; or
send, for the AS of the Relay UE, fifth indication information to the NAS of the Relay UE in a case that the Relay UE sends an RRC connection request message to the network device, and receives an RRC connection rejection message from the network device or determines that RRC connection recovery fails, where the fifth indication information is used to indicate establishment failure of an RRC connection for providing relay service.

It should be understood that in the embodiments of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode, or the like. The user input unit 607 includes a touch panel 6071 and other input devices 6072. The touch panel 6071 is also referred to as a touch screen. The touch panel 6071 may include two parts: a touch detection apparatus and a touch controller. The other input devices 6072 may include but are not limited to a physical keyboard, a functional button (such as a volume control button or a power on/off button), a trackball, a mouse, and a joystick. Details are not described again herein. The memory 609 may be configured to store software programs and various data which include but are not limited to an application program and an operating system. The processor 610 may integrate an application processor and a modem processor. The application processor mainly processes an operating system, a user interface, an application program, and the like. The modem processor mainly processes wireless communication. It can be understood that the modem processor may alternatively be not integrated in the processor 610.

An embodiment of this application further provides a readable storage medium, where the readable storage medium stores a program or instructions, and when the program or instructions are executed by a processor, the processes of the foregoing embodiments of the RRC connection method are implemented, with the same technical effects achieved. To avoid repetition, details are not described herein again.

The processor is the processor in the electronic device in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or an instruction to implement each process of the foregoing RRC connection method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product is stored in a non-volatile storage medium. The computer program product is configured to be executed by at least one processor to implement each process of the foregoing RRC connection method embodiments, with the same technical effects achieved. To avoid repetition, details are not described herein again.

An embodiment of this application further provides an execution apparatus, where the execution apparatus is configured to implement each process of the foregoing RRC connection method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A radio resource control RRC connection method, comprising:
in a case that a relay terminal Relay UE is in a radio resource control idle state RRC_IDLE or a radio resource control inactive state RRC_INACTIVE, determining, by the Relay UE, whether a first condition is satisfied; and
triggering, by the Relay UE, an RRC connection establishment or RRC connection recovery procedure in a case that the Relay UE satisfies the first condition; wherein
the first condition comprises one or more of the following:
the Relay UE determines to provide a relay service for one or more remote terminals Remote UEs; and
the Relay UE receives one or more first messages from one or more Remote UEs, wherein each of the first messages carries a first cause value cause value of each of the Remote UEs for requesting RRC connection recovery or RRC connection establishment.

2. The method according to claim 1, wherein
in a case that the Relay UE is in RRC_IDLE, the triggering, by the Relay UE, an RRC connection establishment procedure is determined by a non-access stratum NAS of the Relay UE; and
in a case that the Relay UE is in RRC _INACTIVE, the triggering, by the Relay UE, an RRC connection recovery procedure is determined by an access stratum AS of the Relay UE.

3. The method according to claim 1 or 2, wherein the method further comprises:
determining, by the AS of the Relay UE, target information, wherein the target information comprises a second cause value and/or a second access category AC; and
sending, by the AS of the Relay UE, first indication information to the NAS of the Relay UE, and determining, by the NAS of the Relay UE, the target information based on the first indication information, wherein the target information comprises at least one of the second cause value, the second AC, and trigger of a NAS signaling procedure.

4. The method according to claim 3, wherein the method further comprises:
in a case that the target information does not comprise the second AC, skipping, by the Relay UE, a unified access control UAC operation and directly sending to a network device an RRC connection establishment request message or an RRC connection recovery request message, wherein the RRC connection establishment request message or the RRC connection recovery request message carries the second cause value.

5. The method according to claim 3, wherein the method further comprises:
performing, by the Relay UE, a unified access control UAC operation based on the second AC in a case that the target information comprises the second cause value and the second AC; and
sending, by the Relay UE to a network device, an RRC connection establishment request message or an RRC connection recovery request message after access barring of the UAC operation is released, wherein the RRC connection establishment request message or the RRC connection recovery request message carries the second cause value.

6. The method according to claim 3, wherein in a case that the target information comprises the second cause value, the determining, by the AS of the Relay UE, target information comprises any one of the following:
assigning, by the AS of the Relay UE, a predetermined cause value as the second cause value, wherein the predetermined cause value is a protocol-defined, pre-configured, or network-configured cause value;
assigning, for the AS of the Relay UE, a specified first cause value among all the received first cause values, as the second cause value;
assigning, by the AS of the Relay UE, a value with a highest priority in all the first cause values and ma-Update, as the second cause value, wherein the priority is a protocol-defined, pre-configured, or network-configured priority; and
assigning, for the AS of the Relay UE, a cause value from an upper layer as the second cause value.

7. The method according to claim 6, wherein in a case that the target information comprises the second AC, the determining, by the AS of the Relay UE, target information comprises:
determining, by the AS of the Relay UE, the second AC based on a mapping relationship between the second cause value and the second AC, wherein the mapping relationship is protocol-defined, pre-configured, or network-configured.

8. The method according to claim 6, wherein the specified first cause value among all the received first cause values comprises any one of the following:
a first cause value carried in the 1st first message among all the first messages;
any one of all the first cause values; and
one of all the first cause values, with the highest priority in a predetermined priority order, where the predetermined priority order is a protocol-defined, pre-configured, or network-configured priority order.

9. The method according to claim 3, wherein the first indication information is used to indicate at least one of the following:
receipt of a connection establishment request or a connection recovery request from the one or more Remote UEs;
determination to provide a relay service for the one or more Remote UEs;
the first cause value for the one or more Remote UEs, wherein the first cause value is carried in the first message;
a third cause value suggested by the AS of the Remote UE; and
a service attribute of the one or more Remote UEs.

10. The method according to claim 4 or 5, wherein the method further comprises:
sending, by the AS of the Relay UE, second indication information to the NAS of the Relay UE in a case that the Relay UE sends the RRC connection recovery request message to the network device and receives an RRC connection recovery message or an RRC connection establishment message from the network device, wherein the second indication information comprises RRC connection recovery success and/or entering RRC _CONNECTED; and
sending, by the Relay UE, an RRC connection recovery complete message to the network device;
or,
sending, by the AS of the Relay UE, third indication information to the NAS of the Relay UE in a case that the Relay UE sends the RRC connection recovery request message to the network device, and receives an RRC connection release message or an RRC connection rejection message from the network device or determines that RRC connection recovery fails, wherein the third indication information comprises recovery failure of an RRC connection for providing relay service.

11. The method according to claim 4 or 5, wherein the method further comprises:
sending, by the AS of the Relay UE, fourth indication information to the NAS of the Relay UE in a case that the Relay UE sends an RRC connection request message to the network device and receives an RRC connection establishment message from the network device, wherein the fourth indication information comprises RRC connection establishment success and/or entering RRC _CONNECTED; and
sending, by the Relay UE, an RRC connection establishment complete message to the network device, and triggering the NAS signaling procedure;
or,
sending, by the AS of the Relay UE, fifth indication information to the NAS of the Relay UE in a case that the Relay UE sends an RRC connection request message to the network device, and receives an RRC connection rejection message from the network device or determines that RRC connection recovery fails, wherein the fifth indication information is used to indicate establishment failure of an RRC connection for providing relay service.

12. An RRC connection apparatus, wherein the apparatus comprises:
a first determining module, configured to: in a case that a Relay UE is in RRC_IDLE or RRC INACTIVE, determine, for the Relay UE, whether a first condition is satisfied; and
a triggering module, configured to trigger, for the Relay UE, an RRC connection establishment or RRC connection recovery procedure in a case that the Relay UE satisfies the first condition; wherein
the first condition comprises one or more of the following:
the Relay UE determines to provide a relay service for one or more Remote UEs; and
the Relay UE receives one or more first messages from one or more Remote UEs, where each of the first messages carries a first cause value cause value of each of the Remote UEs for requesting RRC connection recovery or RRC connection establishment.

13. The apparatus according to claim 12, wherein
in a case that the Relay UE is in RRC_IDLE, the triggering, for the Relay UE, an RRC connection establishment procedure is determined by a NAS of the Relay UE; and
in a case that the Relay UE is in RRC _INACTIVE, the triggering, by the Relay UE, an RRC connection recovery procedure is determined by an AS of the Relay UE.

14. The apparatus according to claim 12 or 13, wherein the apparatus further comprises:
a second determining module, configured to determine, for the AS of the Relay UE, target information, wherein the target information comprises a second cause value and/or a second access category AC; and
a third determining module, configured to: send, for the AS of the Relay UE, first indication information to the NAS of the Relay UE, and determine, for the NAS of the Relay UE, the target information based on the first indication information, wherein the target information comprises at least one of the second cause value, the second AC, and trigger of a NAS signaling procedure.

15. The apparatus according to claim 14, wherein the apparatus further comprises:
a first sending module, configured to: in a case that the target information does not include the second AC, skip, for the Relay UE, a UAC operation and directly send to a network device an RRC connection establishment request message or an RRC connection recovery request message, where the RRC connection establishment request message or the RRC connection recovery request message carries the second cause value.

16. The apparatus according to claim 14, wherein the apparatus further comprises:
an execution module, configured to perform, for the Relay UE, a UAC operation based on the second AC in a case that the target information includes the second cause value and the second AC; and
a second sending module, configured to send, for the Relay UE to a network device, an RRC connection establishment request message or an RRC connection recovery request message after access barring of the UAC operation is released, where the RRC connection establishment request message or the RRC connection recovery request message carries the second cause value.

17. The apparatus according to claim 14, wherein in a case that the target information comprises the second cause value, the first determining module is further configured for any one of the following:
assigning, for the AS of the Relay UE, a predetermined cause value as the second cause value, where the predetermined cause value is a protocol-defined, pre-configured, or network-configured cause value;
assigning, for the AS of the Relay UE, a specified first cause value among all the received first cause values, as the second cause value;
assigning, for the AS of the Relay UE, a value with a highest priority in all the first cause values and ma-Update, as the second cause value, where the priority is a protocol-defined, pre-configured, or network-configured priority; and
assigning, for the AS of the Relay UE, a cause value from an upper layer as the second cause value.

18. The apparatus according to claim 17, wherein in a case that the target information comprises the second cause value, the first determining module is further configured to:
determine, for the AS of the Relay UE, the second AC based on a mapping relationship between the second cause value and the second AC, where the mapping relationship is protocol-defined, pre-configured, or network-configured.

19. The apparatus according to claim 17, wherein the specified first cause value among all the received first cause values comprises any one of the following:
a first cause value carried in the 1st first message among all the first messages;
any one of all the first cause values; and
one of all the first cause values, with the highest priority in a predetermined priority order, where the predetermined priority order is a protocol-defined, pre-configured, or network-configured priority order.

20. The apparatus according to claim 14, wherein the first indication information is used to indicate at least one of the following:
receipt of a connection establishment request or a connection recovery request from the one or more Remote UEs;
determination to provide a relay service for the one or more Remote UEs;
the first cause value for the one or more Remote UEs, wherein the first cause value is carried in the first message;
a third cause value suggested by the AS of the Remote UE; and
a service attribute of the one or more Remote UEs.

21. The apparatus according to claim 15 or 16, wherein the apparatus further comprises:
a third sending module, configured to:
send, for the AS of the Relay UE, second indication information to the NAS of the Relay UE in a case that the Relay UE sends the RRC connection recovery request message to the network device and receives an RRC connection recovery message or an RRC connection establishment message from the network device, where the second indication information includes RRC connection recovery success and/or entering RRC_CONNECTED; and send, for the Relay UE, an RRC connection recovery complete message to the network device;
or,
send, for the AS of the Relay UE, third indication information to the NAS of the Relay UE in a case that the Relay UE sends the RRC connection recovery request message to the network device, and receives an RRC connection release message or an RRC connection rejection message from the network device or determines that RRC connection recovery fails, wherein the third indication information comprises recovery failure of an RRC connection for providing relay service.

22. The apparatus according to claim 15 or 16, wherein the apparatus further comprises:
a fourth sending module, configured to:
send, for the AS of the Relay UE, fourth indication information to the NAS of the Relay UE in a case that the Relay UE sends an RRC connection request message to the network device and receives an RRC connection establishment message from the network device, where the fourth indication information includes RRC connection establishment success and/or entering RRC _CONNECTED; and send, for the Relay UE, an RRC connection establishment complete message to the network device, and trigger the NAS signaling procedure;
or,
send, for the AS of the Relay UE, fifth indication information to the NAS of the Relay UE in a case that the Relay UE sends an RRC connection request message to the network device, and receives an RRC connection rejection message from the network device or determines that RRC connection recovery fails, wherein the fifth indication information is used to indicate establishment failure of an RRC connection for providing relay service.

23. A sidelink SL UE, comprising a processor, a memory, and a program or instructions stored in the memory and capable of running on the processor, wherein when the program or the instructions are executed by the processor, the steps of the RRC connection method according to any one of claims 1 to 11 are implemented.

24. A readable storage medium, wherein the readable storage medium stores a program or instructions, and when the program or instructions are executed by a processor, the steps of the RRC connection method according to any one of claims 1 to 11 are implemented.

25. A chip, comprising a processor and a communication interface, wherein the communication interface is coupled to the processor, and the processor is configured to run a program or instructions to implement the steps of the RRC connection method according to any one of claims 1 to 11.

26. A computer program product, wherein the program product is stored in a non-volatile storage medium, and the program product is executed by at least one processor to implement the RRC connection method according to any one of claims 1 to 11.

27. An execution apparatus, configured to implement the RRC connection method according to any one of claims 1 to 11.
